# EUROPÄISCHE PATENTANMELDUNG

(11) **EP 4 361 978 A1**
(43) Veröffentlichungstag der Anmeldung: **01.05.2024**
(21) Anmeldenummer: 22203517.2
(22) Anmeldetag: 25.10.2022
(51) Int. Cl.: G07F 7/06, G06Q 20/40

(54) **LEERGUTGEBINDE-RÜCKNAHMEVORRICHTUNG, ERMITTLUNGSVORRICHTUNG FÜR EINE LEERGUTGEBINDE-RÜCKNAHMEVORRICHTUNG UND COMPUTERLESBARES MEDIUM MIT INSTRUKTIONEN FÜR EINE LEERGUTGEBINDE-RÜCKNAHMEVORRICHTUNG**

(71) Anmelder: RE DEPOSIT Solutions GmbH, 98693 Ilmenau (DE)
(72) Erfinder: GEHL, Leon, 98693 Ilmenau (DE); FRANKE, Volker, 99310 Arnstadt (DE)
(74) Vertreter: Viering, Jentschura & Partner mbB Patent- und Rechtsanwälte

(57) **Zusammenfassung**

In verschiedenen Ausführungsbeispielen wird ein Leergutgebinde-Rücknahmevorrichtung (100) bereitgestellt, aufweisend: eine Entwertungseinheit (112) eingerichtet zur Entwertung von Leergutgebinden (104), wobei die Entwertung unter Verwendung eines Elektromotors (130) erfolgt; einen Sensor (134), der eingerichtet ist, eine elektrische Messgröße, welche eine Leistungsaufnahme des Elektromotors (130) repräsentiert, zu erfassen; und eine Ermittlungsvorrichtung (118), die eingerichtet ist zu ermitteln, ob für die erfasste elektrische Messgröße ein vorgegebenes Entwertungskriterium erfüllt ist und ein Entwertungsvorgang-Ausgabesignal (154) auszugeben, wenn das vorgegebene Entwertungskriterium erfüllt ist, wobei das Entwertungsvorgang-Ausgabesignal (154) anzeigt, dass die Entwertung eines Leergutgebindes stattgefunden hat.

## Beschreibung

Verschiedene Ausführungsbeispiele betreffen eine Leergutgebinde-Rücknahmevorrichtung.

Im Bereich der Leergutgebinde-Rücknahme sind die zurückgenommenen Leergutgebinde in der Regel mit einem Pfandwert beaufschlagt. Leergutgebinde können PET-Flaschen, Dosen oder Einwegglasflaschen sein. Bei der Leergutgebinde-Rücknahme wird über einen optischen Sensor oder Ultraschallsensor das Zuführen des Leergutgebinde in eine Entwertungseinheit ermittelt. Die Entwertungseinheit weist abhängig von der Art des Leergutgebindes ein Schneidwerk (bspw. für PET-Flaschen), ein Kompaktierwerk (bspw. für Dosen) oder ein Brechwerk (bspw. für Einwegglasflaschen) auf.

In der Vergangenheit ging man davon aus, dass durch eine Quittierung eines Sensors, dass das Leergutgebinde der Entwertungseinheit zugeführt wurde, eine ausreichende Betrugssicherheit gegeben sei und von einer sicheren Entwertung (Zerstörung) des zuvor bepfandeten Leergutgebindes (auch als pfandbeaufschlagtes Leergutgebinde bezeichnet) ausgegangen werden kann. Manipulationen an den Leergutgebinde-Rücknahmevorrichtungen haben jedoch dazu geführt, dass Leergutgebinde zwischen der Quittierung des Sensors und der Entwertungseinheit abgefangen wurden und erneut der Leergutgebinde-Rücknahmevorrichtung zugeführt werden konnten.

Daher ist ein technischer Nachweis der Entwertung bzw. Zerstörung bepfandeter Leergutgebinde vor einer Auszahlung des Pfandbetrages erforderlich.

Herkömmliche Nachweise der Entwertung sind beispielsweise:
- eine Messung und Auswertung der beim Kompaktier-(Entwertungs-)Vorgang ausgeübten Kräfte zwischen den am Kompaktiervorgang beteiligten Komponenten mittels Kraftmessdose;
- eine Messung und Auswertung der Drehmomentänderungen an einer Kompaktiererwelle beim Kompaktier-(Entwertungs-)Vorgang mittels Drehmomentsensors;
- eine Messung und Auswertung der Drehwinkelgeschwindigkeitsänderung an einer Welle der Kompaktiereinheit beim Kompaktier-(Entwertungs-)Vorgang;
- eine Messung und Auswertung der beim Kompaktier-(Entwertungs-)Vorgang auftretenden Relativbewegungen verschiedener Bauteile mittels Hall-Sensor; und
- eine Messung und Auswertung der beim Kompaktier-(Entwertungs-)Vorgang auftretenden Geräusche im Vergleich zu den Leerlaufgeräuschen der Leergutgebinde-Rücknahmevorrichtung.

Die herkömmlichen technischen Nachweismöglichkeiten können sehr kostenintensiv und/oder technisch sehr aufwändig sein. Weiterhin kann der verfügbare Einbauraum in einer Leergutgebinde-Rücknahmevorrichtung einen Einbau herkömmlicher technischer Nachweismöglichkeiten verhindern. Auch können herkömmliche technische Nachweismöglichkeiten eine technisch nicht ausreichende Zuverlässigkeit aufweisen. Weiterhin kann es erforderlich sein, herkömmliche technische Nachweismöglichkeiten im unmittelbaren Verschmutzungsbereich der Leergutgebinde-Rücknahmevorrichtung anzuordnen. Dies kann einen höheren Wartungsaufwand bedingen. Auch können herkömmliche technische Nachweismöglichkeiten für verschiedene Entwertungsverfahren unterschiedliche technische Nachweismöglichkeiten erfordern. Einige der herkömmlichen technischen Nachweismöglichkeiten konnten zudem derzeit noch keinen Beweis einer Langzeitstabilität, insbesondere bei verschlissenen Kompaktiereinheiten, erbringen.

Es wird eine Leergutgebinde-Rücknahmevorrichtung, eine Ermittlungsvorrichtung für eine Leergutgebinde-Rücknahmevorrichtung und ein computerlesbares Medium mit Instruktionen für eine Leergutgebinde-Rücknahmevorrichtung bereitgestellt. Diese ermöglichen eine verbesserte Leergutgebinde-Rücknahme, beispielsweise eine Leergutgebinde-Rücknahme mit verbessertem Betrugsschutz, bereitzustellen.

Verschiedene Ausführungsformen beziehen sich auf eine Leergutgebinde-Rücknahmevorrichtung aufweisend: eine Entwertungseinheit eingerichtet zur Entwertung von Leergutgebinden, wobei die Entwertung unter Verwendung eines Elektromotors erfolgt; einen Sensor, der eingerichtet ist, eine elektrische Messgröße, welche eine Leistungsaufnahme des Elektromotors repräsentiert, zu erfassen; und eine Ermittlungsvorrichtung, die eingerichtet ist zu ermitteln, ob für die erfasste elektrische Messgröße ein vorgegebenes Entwertungskriterium erfüllt ist und ein Entwertungsvorgang-Ausgabesignal auszugeben, wenn das vorgegebene Entwertungskriterium erfüllt ist, wobei das Entwertungsvorgang-Ausgabesignal anzeigt, dass die Entwertung eines Leergutgebindes stattgefunden hat.

Das vorgegebene Entwertungskriterium kann ein Überschreiten eines vorgegebenen Schwellenwertes, ein Abweichen oder Übereinstimmen des zeitlichen Verlaufs der erfassten elektrischen Messgröße von bzw. mit einem Referenzverlauf und/oder eine Zuordnung der erfassten elektrischen Messgröße zu einem Leergutgebindetyp aus einer Vielzahl von Leergutgebindetypen basierend auf einem oder mehreren Referenzwerten der elektrischen Messgröße aufweisen. Ein Referenzverlauf kann beispielsweise einen Anstieg und/oder einen Abfall der elektrischen Messgröße innerhalb einer oder mehrerer Zeitperioden aufweisen.

Der Sensor kann an unterschiedlichen Positionen in oder an der Leergutgebinde-Rücknahmevorrichtung angeordnet sein. Die Messung der mindestens einen elektrischen Messgröße kann in oder um einen oder mehrere Leiter (beispielsweise Stromkabel) des Elektromotors oder zum Elektromotor sein. Alternativ oder zusätzlich kann die mindestens eine elektrische Messgröße am Elektromotor ermittelt werden. Die Ermittlungsvorrichtung, beispielsweise der Sensor zum Erfassen der elektrischen Messgröße, kann unmittelbar vor dem Elektromotor, entlang eines Strompfades zum Elektromotor oder vor der Ansteuerung des Elektromotors verbaut sein. Die elektrische Messgröße kann beispielsweise eine Stromstärke des Betriebsstromes des Elektromotors sein, eine Leistungsaufnahme des Elektromotors sein, ein elektrischer Widerstand des Elektromotors sein, oder ähnliches sein, beispielsweise ein durch den Betriebsstrom erzeugtes Magnetfeld.

Dies ermöglicht eine Leergutgebinde-Rücknahme mit verbessertem Betrugsschutz bereitzustellen.

Verschiedene Ausführungsbeispiele betreffen eine Ermittlungsvorrichtung für einen Elektromotor einer Leergutgebinde-Rücknahmevorrichtung, die Ermittlungsvorrichtung eingerichtet zu ermitteln, ob für eine erfasste elektrische Messgröße des Elektromotors ein vorgegebenes Entwertungskriterium erfüllt ist, wobei die elektrische Größe mittels eines Sensors der Leergutgebinde-Rücknahmevorrichtung erfasst wird und wobei die Entwertung des Leergutgebindes unter Verwendung des Elektromotors einer Entwertungseinheit, die zur Entwertung von Leergutgebinden eingerichtet ist, erfolgt; die Ermittlungsvorrichtung ferner eingerichtet ein Entwertungsvorgang-Ausgabesignal auszugeben, wenn das vorgegebene Entwertungskriterium erfüllt ist, wobei das Entwertungsvorgang-Ausgabesignal anzeigt (beispielsweise angibt oder dazu korrespondiert), dass die Entwertung eines Leergutgebindes stattgefunden hat.

Dies ermöglicht eine einfache Montage/Demontage der Ermittlungsvorrichtung in oder an der Leergutgebinde-Rücknahmevorrichtung.

Verschiedene Ausführungsbeispiele betreffen ein computerlesbares Medium für eine Leergutgebinde-Rücknahmevorrichtung aufweisend Instruktionen, die, wenn sie von einem Prozessor ausgeführt werden, den Prozessor dazu veranlassen: Ermitteln, durch eine vorgenannte Ermittlungsvorrichtung einer elektrischen Messgröße eines während der Entwertung eines Leergutgebindes in der Leergutgebinde-Rücknahmevorrichtung; Vergleichen der erfassten elektrischen Messgröße mit einem vorgegebenen Entwertungskriterium erfüllt ist; und Ausgeben eines Entwertungsvorgang-Ausgabesignals, wenn das vorgegebene Entwertungskriterium erfüllt ist, wobei das Entwertungsvorgang-Ausgabesignal anzeigt, dass die Entwertung eines Leergutgebindes stattgefunden hat.

Dies ermöglicht eine Leergutgebinde-Rücknahme mit verbessertem Betrugsschutz bereitzustellen.

Ausführungsbeispiele der Erfindung sind in den Figuren dargestellt und werden im Folgenden näher erläutert.

### Es zeigen:

- Figuren 1A bis 1C: schematische Ansichten einer Leergutgebinde-Rücknahmevorrichtung;
- Figur 2: ein Schaltplan eines Beispiels einer Auswertevorrichtung einer Leergutgebinde-Rücknahmevorrichtung;
- Figur 3: ein Ablaufdiagramm eines Verfahrens zur Leergutgebinde-Rücknahme; und
- Figur 4: ein Messdiagramm einer Leergutgebinde-Rücknahmevorrichtung bei einer Leergutgebinde-Rücknahme.

Die folgende ausführliche Beschreibung bezieht sich auf die beigefügten Zeichnungen, in denen zur Veranschaulichung spezifische Details und Ausführungsformen gezeigt sind, in denen die Erfindung ausgeübt werden kann. Es versteht sich, dass andere Ausführungsformen benutzt und strukturelle oder logische Änderungen vorgenommen werden können, ohne von dem Schutzumfang der vorliegenden Erfindung abzuweichen. Es versteht sich, dass die Merkmale der hierin beschriebenen verschiedenen beispielhaften Ausführungsformen miteinander kombiniert werden können, sofern nicht spezifisch anders angegeben. Die folgende Beschreibung ist deshalb nicht in einschränkendem Sinne aufzufassen, und der Schutzumfang der vorliegenden Erfindung wird durch die angefügten Ansprüche definiert.

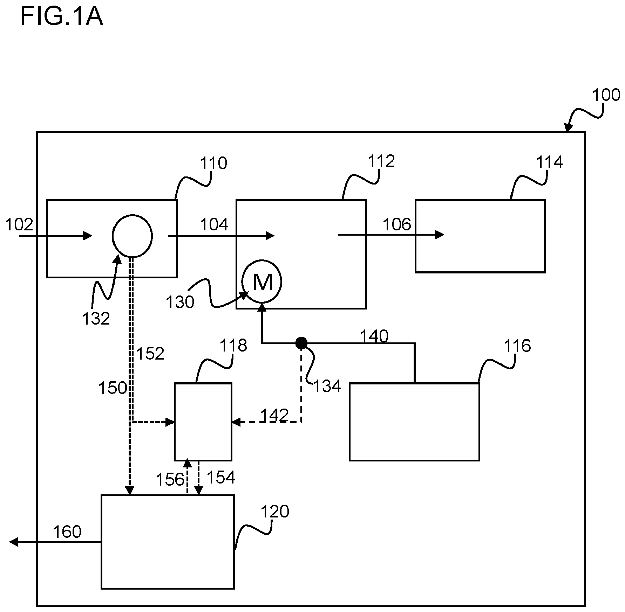

**FIG.1A** veranschaulicht eine schematische Ansicht einer Leergutgebinde-Rücknahmevorrichtung 100.

Die Leergutgebinde-Rücknahmevorrichtung 100 weist eine Leergutgebinde-Annahme- und Sortiereinheit 110 auf, in die Leergutgebinde 102 von extern zugeführt werden. In der Leergutgebinde-Annahme- und Sortiereinheit 110 wird zugeführtes Leergutgebinde 102 beispielsweise auf einem Laufband an einem Sensor 132 (auch als zusätzlicher Sensor 132 bezeichnet) vorbeigeführt, der den Typ des Leergutgebindes 102 erfasst. Im Falle eines pfandbeaufschlagten Leergutgebindes 102 wird das pfandbeaufschlagte Leergutgebinde einer entsprechenden Entwertungseinheit 112 als sortiertes bzw. erfasstes Leergutgebinde 104 zugeführt.

Der Sensor 132 kann den ermittelten Typ des erfassten Leergutgebindes 104 an eine Pfandrückgabeeinheit 120 übermitteln (in FIG.1A mittels des gepunkteten Pfeils 150 veranschaulicht).

Die Entwertungseinheit 112 weist einen Elektromotor 130 auf mittels dessen das erfasste Leergutgebinde 104 derart entwertet wird, dass es nicht erneut der Leergutgebinde-Rücknahmevorrichtung 100 zugeführt werden kann.

Das Leergutgebinde 102 kann beispielsweise eine PET-Flasche, eine Einwegglasflasche oder eine Dose sein.

Entsprechend kann die Entwertungseinheit 112 ein Schneidwerk (beispielsweise für PET-Flaschen), ein Kompaktierwerk (beispielsweise für Dosen) oder ein Brechwerk (beispielsweise für Einwegglasflaschen) aufweisen.

Der Elektromotor 130 ist mittels eines zumindest dreiphasigen Kabels 140 mit einer Stromversorgung 116 der Leergutgebinde-Rücknahmevorrichtung 100 verbunden, beispielsweise einem dreiphasigen Kabel oder einem fünfphasigem Kabel. Durch das Kabel 140 wird dem Elektromotor 130 ein elektrischer Strom (auch als Betriebsstrom bezeichnet) zum Betrieb zugeführt. Der Elektromotor 130 treibt mit dem Betriebsstrom ein mechanisches Werk zur Entwertung des erfassten Leergutgebindes 104 an, beispielsweise ein Schneidwerk, ein Kompaktierwerk oder ein Brechwerk.

Die Leistungsaufnahme des Elektromotors 130 kann abhängig von dem mechanischen Widerstand des erfassten Leergutgebindes 104 in dem mechanischen Werk während der Entwertung sein. Ein hoher mechanischer Widerstand kann dabei eine hohe Stromstärke des Betriebsstromes bedingen. Abhängig von dem Typ des zu entwertendem Leergutgebindes 104 können somit unterschiedliche Betriebsströme auftreten. Die Leistungsaufnahme des Elektromotors 130 kann mittels Erfassens einer elektrischen Messgröße erfolgen, die direkt oder indirekt zu der Leistungsaufnahme korrespondiert bzw. korreliert ist. Der zeitliche Verlauf der elektrischen Messgröße wird hierin auch als Betriebsstromprofil bezeichnet. Das Betriebsstromprofil ist nicht notwendigerweise die Stromstärke oder die Spannung an dem Elektromotor 130. Die Betriebsstromprofile einzelner Typen von Leergutgebinden können sich voneinander unterscheiden.

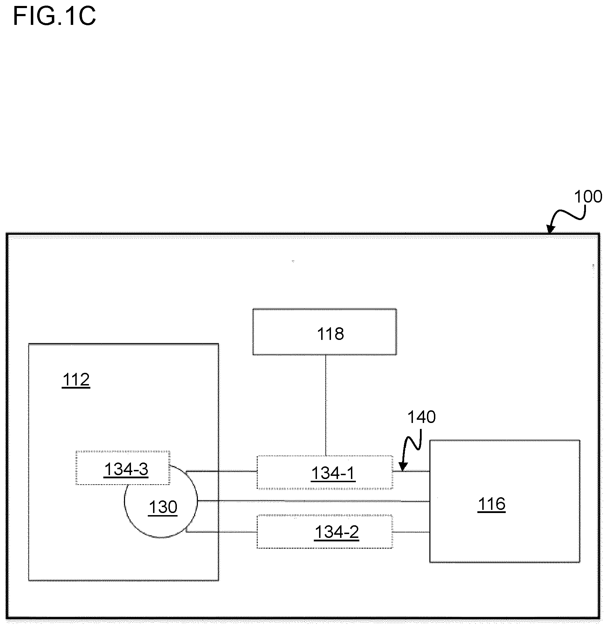

Die elektrische Messgröße wird von einem Sensor 134 während der Entwertung, beispielsweise in dem Kabel 140 von einer erfasst, (in FIG.1A mittels des gestrichelten Pfeils 142 veranschaulicht, siehe auch FIG.1C).

Die elektrische Messgröße kann mindestens eine erfassbare elektrische Messgröße in oder um einen oder mehrere Leiter (beispielsweise das Stromkabel 140) des Elektromotors 130 oder zum Elektromotor 130 sein. Alternativ oder zusätzlich kann die mindestens eine elektrische Messgröße am Elektromotor 130 ermittelt werden.

Der Sensor 134 zum Erfassen der elektrischen Messgröße kann unmittelbar vor dem Elektromotor 130, entlang eines Strompfades zum Elektromotor 130, oder vor der Ansteuerung des Elektromotors 130 verbaut sein.

Die elektrische Messgröße kann beispielsweise eine Stromstärke des Betriebsstromes des Elektromotors 130 sein, eine Leistungsaufnahme des Elektromotors 130 sein, ein elektrischer Widerstand des Elektromotors 130 sein, oder ähnliches sein, beispielsweise ein Magnetfeld des Elektromotors 130 oder eines Stromkabels zum Elektromotor. Alternativ zum Kabel kann der Sensor 134 mit Kontakten des Elektromotors 130 gekoppelt sein.

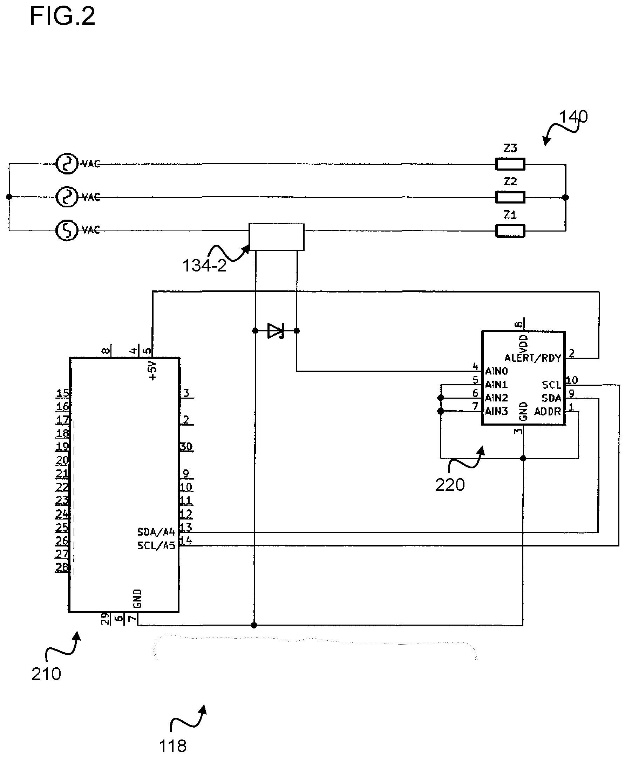

Die elektrische Messgröße ist beispielsweise die Stromstärke des Betriebsstromes an mindestens einer Phase eines Stroms in einem Stromkabel 140 des Elektromotors 130. Der Sensor 134 zum Erfassen der elektrischen Messgröße kann beispielsweise eingerichtet sein, die Stromstärke an mindestens einer Phase des Elektromotors 130 in dem Kabel 140 zu erfassen, wie in FIG.1C und FIG.2 ausführlicher veranschaulicht ist.

Die Ermittlungsvorrichtung 118 ermittelt anhand der erfassten elektrischen Messgröße einen Entwertungsvorgang und optional den Leergutgebinde-Typ des entwerteten Leergutgebindes 104. Der ermittelte Entwertungsvorgang und optional der ermittelte Leergutgebinde-Typ kann an die Pfandrückgabeeinheit 120 mittels eines Entwertungsvorgang-Ausgabesignals 154 übermittelt werden. Die Pfandrückgabeeinheit 120 kann das von dem zusätzlichen Sensor 132 erfasste Leergutgebinde mit dem von der Ermittlungsvorrichtung 118 ermittelten Entwertungsgang und optional den Leergutgebinde-Typ des Entwertungsvorgang-Ausgabesignals 154 abgleichen. Bei Übereinstimmung des erfassten bzw. ermittelten Leergutgebindes 150 kann die Pfandrückgabeeinheit 120 das Pfand des zugeführten Leergutgebindes 102 ausgeben (in FIG.1A mittels des Pfeils 160 veranschaulicht).

Darüberhinaus kann die Information zu dem erfassten Leergutgebinde 104 von dem Sensor 132 (in FIG.1A mittels des gepunkteten Pfeils 152 veranschaulicht) und/oder der Pfandrückgabeeinheit 120 (in FIG.1A mittels des gepunkteten Pfeils 156 veranschaulicht) an die Ermittlungsvorrichtung 118 übermittelt werden. Die Ermittlungsvorrichtung 118 kann mittels dieser Information im Laufe der Zeit die Zuordnung von Entwertungen zu verifizierten Entwertungen in einem Maschinenlernalgorithmus verbessern. Die Ermittlungsvorrichtung 118 kann dazu eine drahtlose oder drahtgebundene Kommunikationsverbindung mit der Pfandrückgabeeinheit 120 und/oder dem Sensor 152 aufweisen.

Das entwerte Leergutgebinde 106 wird einem Sammelbehälter 114 zugeführt.

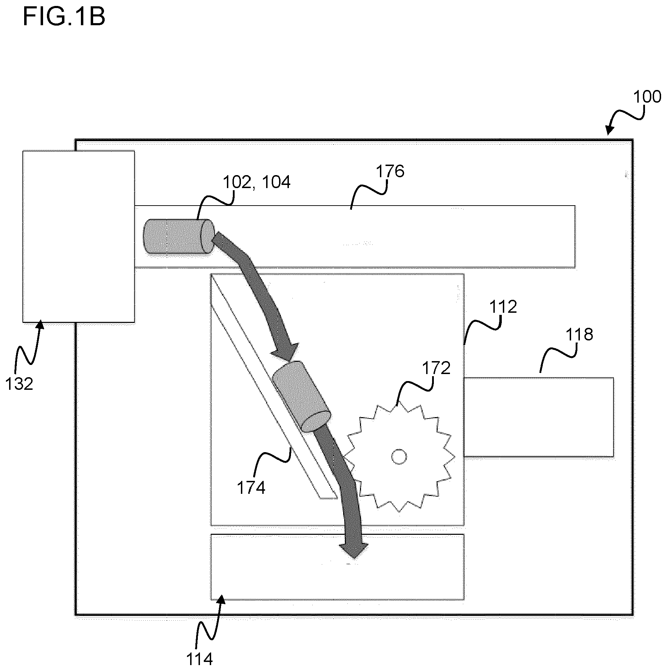

**FIG.1B** veranschaulicht eine weitere schematische Ansicht einer zuvor beschriebenen Leergutgebinde-Rücknahmevorrichtung 100.

Die Leergutgebinde-Annahme- und Sortiereinheit kann den zusätzlichen Sensor 132 aufweisen, der vor einem Zuführband 176 angeordnet ist.

Die Entwertungseinheit 112 kann ein mechanisches Werk 172 aufweisen, das mittels des Elektromotors angetrieben wird.

Leergutgebinde 104 können dem mechanischen Werk 172 von dem Zuführband 176 zugeführt werden, beispielsweise mittels einer geneigten Ebene (z.B. einer geneigten Platte) 174. Die geneigte Ebene 174 kann das Zuführband 176 mit dem mechanischen Werk 172 verbinden.

**FIG.1C** veranschaulicht eine weitere schematische Ansicht einer zuvor beschriebenen Leergutgebinde-Rücknahmevorrichtung 100.

Der Elektromotor 130 der Entwertungseinheit 112, der das mechanische Werk (siehe FIG.1B) zur Entwertung der Leergutgebinde antreibt, kann mittels eines mehrphasigen Stromkabels 140, beispielsweise einem drei- oder fünfphasigem Stromkabel 140, mit einer Stromquelle 116 der Leergutgebinde-Rücknahmevorrichtung 100 zum Betrieb verbunden sein.

Der Sensor 134 kann beispielsweise ein Stromwandler 134-2 sein, der eingerichtet ist, die Stromstärke an mindestens einer Phase des Kabels 140 zum Elektromotor 130 zu erfassen.

Alternativ oder zusätzlich kann der Sensor 134 einen Messwiderstand 134-1 aufweisen, der eingerichtet ist, einen Spannungsabfall in mindestens einer Phase des Kabels 140 zum Elektromotor 130 zu erfassen.

Alternativ oder zusätzlich kann der Sensor 134 einen Hall-Sensor 134-3 aufweisen, der eingerichtet ist, ein Magnetfeld in dem Elektromotor 130 zu erfassen.

Alternativ oder zusätzlich kann der Sensor 134 eingerichtet sein, ein auftretendes Geräusch und/oder eine Drehzahl des Elektromotors 130 zu erfassen.

Der Sensor 134 kann einen oder mehrere der vorgenannten Sensoren 134-1, 134-2, 134-3 aufweisen.

Der Sensor 134, beispielsweise ein Stromwandler 134-2, ermöglicht, dass die Auswertevorrichtung 118 auf einfache Weise in der Leergutgebinde-Rücknahmevorrichtung nachgerüstet bzw. verbaut werden kann.

**FIG.2** veranschaulicht einen Schaltplan einer Auswertevorrichtung 118 einer Leergutgebinde-Rücknahmevorrichtung, beispielsweise einer zuvor beschriebenen Leergutgebinde-Rücknahmevorrichtung.

Die Auswertevorrichtung 118 ist beispielsweise eingerichtet zur Auswertung der mittels des Sensors erfassten elektrischen Messgröße bezüglich eines vorgegebenen Entscheidungskriteriums.

Der Sensor 134 zum Erfassen der elektrischen Messgröße, beispielsweise ein Stromwandler 134-2, wie auch in FIG.1C veranschaulicht ist, erfasst ein analoges Signal (auch als analoges Messsignal bezeichnet). Die Auswertevorrichtung 118 kann einen Analog/Digital-Wandler 220 aufweisen, der aus dem analogen Messsignal ein digitalisiertes Messsignal an einen (Mikro-)Controller 210 der Auswertevorrichtung 118 bereitstellt.

Der Controller 210 bereitet das digitalisierte Messsignal auf. Beispielsweise kann der Controller 210 das erfasste Messsignal einlesen und dieses über eine digitale Schnittstelle auszugeben. Optional kann der Controller das digitalisierte Messsignal auswerten, beispielsweise umrechnen und/oder filtern. Beispielsweise kann der Controller 210 Überspannungen, die beim Ein- und Ausschalten des Elektromotors auftreten, aus dem Betriebsstromprofil filtern.

Der Controller 210 gibt das aufbereitete digitalisierte Messsignal an eine Auswerteeinheit aus. In der Auswerteeinheit kann die Auswertung und Weiterverarbeitung der aufbereiteten digitalisierten Messsignale erfolgen, beispielsweise die Zuordnung des Betriebsstromprofils zu einem Leergutgebindetyp aus einer Vielzahl von Leergutgebindetypen.

Die Auswerteeinheit kann beispielsweise in der Pfandrückgabeeinheit 120 integriert sein. Alternativ oder zusätzlich kann die Auswerteeinheit ein Personal Computer (PC) sein oder aufweisen, der in der Leergutgebinde-Rücknahmevorrichtung 100 angeordnet ist oder extern zu der Leergutgebinde-Rücknahmevorrichtung 100 angeordnet ist.

Alternativ oder zusätzlich kann die Auswertung der aufbereiteten digitalisierten Messsignale unmittelbar auf dem Mikrocontroller erfolgen, beispielsweise in einem sogenanntem Central Control Module (CCM). In diesem Fall können Ergebnisdaten, beispielsweise ein ermittelter LeergutgebindeTyp, an eine Hauptrechen-/Steuereinheit, beispielsweise einen PC, eine speicherprogrammierbare Steuerung (SPS), die Pfandrückgabeeinheit 120 oder Ähnliches, weitergeleitet werden.

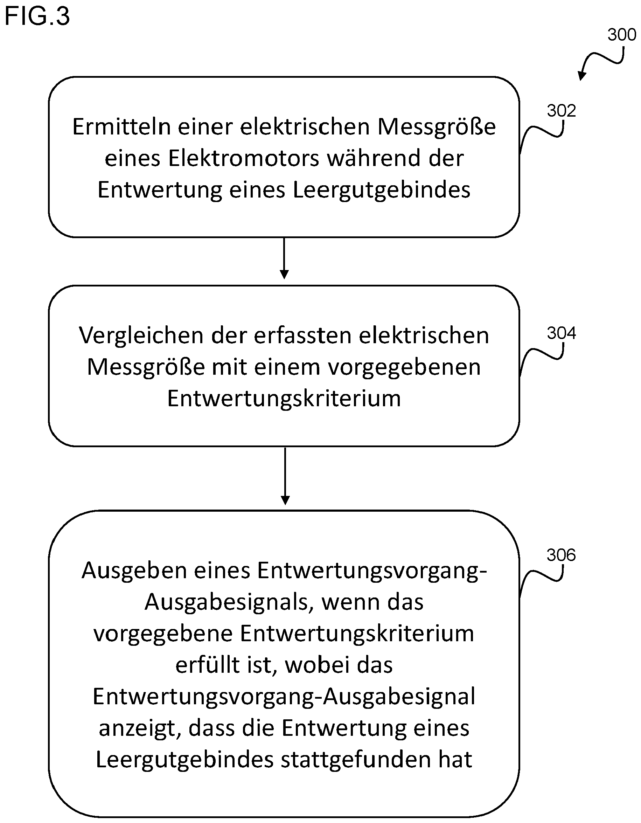

**FIG.3** veranschaulicht ein Ablaufdiagramm eines Verfahrens 300 zur Leergutgebinde-Rücknahme. Das Verfahren kann ein Ermitteln 302, durch eine zuvor beschriebene Ermittlungsvorrichtung, einer elektrischen Messgröße eines Elektromotors während der Entwertung eines Leergutgebindes in der Leergutgebinde-Rücknahmevorrichtung aufweisen. Die Entwertung des Leergutgebindes erfolgt dabei unter Verwendung des Elektromotors einer Entwertungseinheit wie oben ausführlicher beschrieben ist.

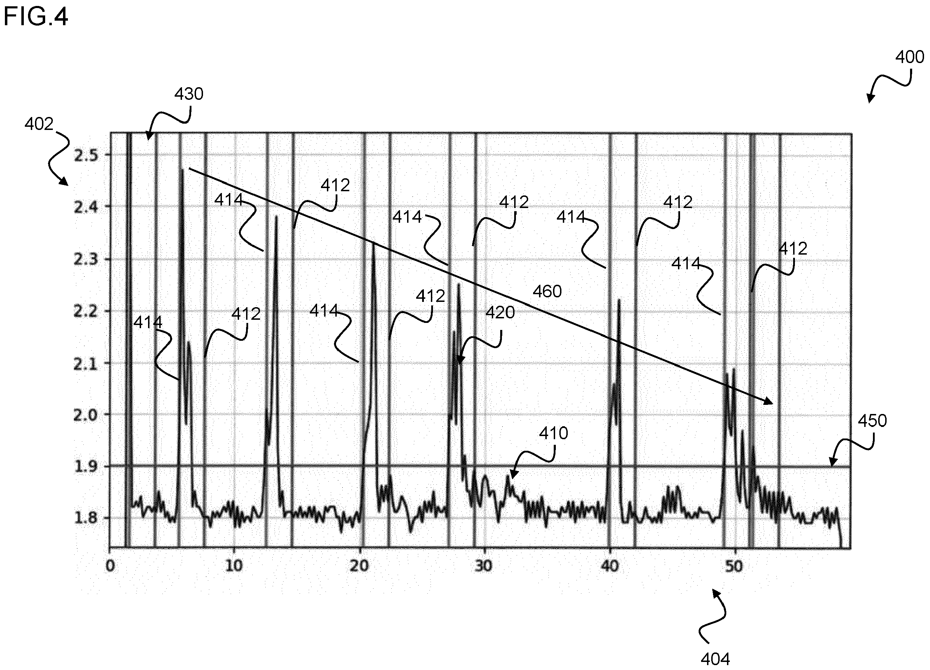

Das Verfahren weist ein Vergleichen 304 der erfassten elektrischen Messgröße mit einem vorgegebenen Entwertungskriterium auf. Das vorgegebene Entwertungskriterium kann ein Überschreiten eines vorgegebenen Schwellenwertes 450 (siehe auch FIG.4), einen zeitlichen Verlauf der erfassten elektrischen Messgröße und/oder eine Zuordnung der erfassten elektrischen Messgröße zu einem Leergutgebindetyp aus einer Vielzahl von Leergutgebindetypen aufweisen. Die Zuordnung kann beispielsweise qualitativ erfolgen.

Die elektrische Messgröße kann beispielsweise mittels eines Stromwandlers erfasst werden, der eingerichtet ist, eine Stromstärke an mindestens einer Phase des Elektromotors zu erfassen. Alternativ oder zusätzlich kann die elektrische Messgröße mittels eines Messwiderstandes erfasst werden, der eingerichtet ist, einen Spannungsabfall an mindestens einer Phase des Elektromotors zu erfassen. Alternativ oder zusätzlich kann die elektrische Messgröße mittels eines HallSensors erfasst werden, der eingerichtet ist, ein Magnetfeld des Elektromotors oder eines Stromkabels zum Elektromotor zu erfassen.

Das Verfahren 300 weist ferner ein Ausgeben 306 eines Entwertungsvorgang-Ausgabesignals auf, wenn das vorgegebene Entwertungskriterium erfüllt ist. Das Entwertungsvorgang-Ausgabesignal zeigt an, dass die Entwertung eines Leergutgebindes stattgefunden hat.

Das Entwertungskriterium kann beispielsweise ein zeitlicher Verlauf der elektrischen Messgröße aufweisen oder berücksichtigen. Der zeitliche Verlauf kann auch als Betriebsstromprofil bezeichnet werden und korrespondiert direkt oder indirekt mit der Leistungsaufnahme des Elektromotors. Zur Entscheidung, ob das Entscheidungskriterium erfüllt ist, kann das erfasste Betriebsstromprofil mit einer Vielzahl gespeicherter Betriebsstromprofile qualitativ oder quantitativ verglichen werden. Die gespeicherten Betriebsstromprofile können idealisierte Betriebsstromprofile (beispielsweise zeitgeglättete Betriebsstromprofile), gemittelte Betriebsstromprofile (beispielsweise über mehrere Entwertungsvorgänge gemittelte Betriebsstromprofile) und/oder charakteristische Betriebsstromprofile (beispielsweise einer Kalibrierungsentwertung) sein.

Ein Betriebsstromprofil kann mehrere für ein Leergutgebindetyp charakteristische Merkmale aufweisen, beispielweise den globalen Maximalwert der Leistungsaufnahme, die lokalen Maximalwerte der Leistungsaufnahme, die Anzahl lokaler Maximalwerte der Leistungsaufnahme, den zeitlichen Verlauf der Leistungsaufnahme je Entwertungsperiode und/oder den zeitlichen Verlauf der lokalen Maximalwerte, wie in FIG.4 ausführlicher veranschaulicht ist. Bei einer Übereinstimmung einer vorgegebenen Anzahl an Merkmalen des erfassten Betriebsstromprofils mit einem Betriebsstromprofil der Vielzahl von Betriebsstromprofilen der Vielzahl von Leergutgebindetypen kann eine Zuordnung des erfassten Betriebsstromprofils zu einem Leerguttyp der Vielzahl von Leerguttypen erfolgen.

Die vorgegebene Anzahl an Merkmalen und/oder die charakteristischen Merkmale der gespeicherten Betriebsstromprofile können im Verlauf der Zeit angepasst werden, beispielsweise mittels eines Maschinenlernalgorithmus. Dadurch kann beispielsweise der individuelle Verschleiß bzw. der aktuelle Zustand der Entwertungsvorrichtung in der Ermittlung des Leergutgebindetyps berücksichtigt werden. Beispielsweise kann nach einem positiven Abgleich des ermittelten Leergutgebindetyps in der Pfandrückgabe eine Bestätigung an die Ermittlungsvorrichtung übermittelt werden, so dass der ermittelte Leergutgebindetyp und das Betriebsstromprofil in der Ermittlungsvorrichtung bestätigt (beispielsweise verstärkt) wird. Dadurch kann die Ermittlung des Leergutgebindetyps verbessert werden, beispielsweise beschleunigt werden.

Das Verfahren 300 kann ein Übermitteln des ermittelten Leergutgebindetyps durch die Ermittlungsvorrichtung an die Pfandrückgabeeinheit aufweisen. Die Übermittlung kann drahtgebunden oder drahtlos mittels einer Kommunikationsverbindung erfolgen.

Das Verfahren kann ferner ein Abgleichen des durch die Ermittlungsvorrichtung ermittelten Leergutgebindetyps mit dem Leergutgebindetyp desselben Leergutgebindes, der von mindestens einem weiteren Sensor ermittelt wurde, aufweisen. Der weitere Sensor kann beispielsweise in der Leergutgebinde-Annahme- und Sortiereinheit (siehe FIG.1A und FIG.1B) angeordnet sein.

Nach positivem Abgleich kann eine Auszahlung des Pfands erfolgen. Zusätzlich kann eine Rückmeldung über den positiven Abgleich an die Ermittlungsvorrichtung und/oder den Sensor erfolgen, um deren Erkennung zu verbessern.

**FIG.4** veranschaulicht ein Messdiagramm einer Leergutgebinde-Rücknahmevorrichtung bei einer Leergutgebinde-Rücknahme.

Das Messdiagramm illustriert einen erfassten zeitlichen Verlauf einer elektrischen Messgröße (Betriebsstromprofil 400) - hier die mittels eines Stromwandlers gemessene Stromstärke, eines Elektromotors einer Entwertungseinheit bei der Entwertung einer 1,5 l PET-Flasche 410. Das Betriebsstromprofil 400 ist die Stromstärke 402 des in dem Kabel zum Elektromotor erfassten Betriebsstromes als Funktion der Zeit 404 in Sekunden.

Die Auswerteeinheit kann einen Stromstärken-Schwellenwert 450 aufweisen. Der Stromstärken-Schwellenwert 450 kann auf das Betriebsstromprofil 400 beispielsweise als Entscheidungskriterium angewendet werden. Stromstärkewerte 402 gleich oder größer als der Stromstärken-Schwellenwert 450 können als Entwertungsvorgang von Leergutgebinde interpretiert werden. Überschreitet die erfasste Stromstärke 402 den Schwellenwert 450, gilt dies als Nachweis einer zumindest partiell erfolgten Entwertung eines Leergutgebindes.

Die Auswerteeinheit kann den zeitlichen Beginn 414, d.h. den Zeitpunkt 414, in dem die erfasste Stromstärke den Stromstärken-Schwellenwert 450 überschreitet; eines Entwertungsvorganges des erfassten Leergutgebindes (siehe auch FIG.1A) erfassen.

Die Auswerteeinheit kann basierend auf dem vom Sensor erfassten Leergutgebinde-Typ eine Entwertungsperiode 412 ermitteln. Alternativ oder zusätzlich kann die Auswerteeinheit eine vorgegebene Zeitperiode 414 als Entwertungsperiode bestimmen. Mit anderen Worten, das erwartete Ende 412 der Entwertungsperiode kann ein programmierbarer Wert sein, welcher durch signifikante Versuche vorermittelt wurde. Die Entwertungsperiode 412 ist somit der Zeitraum, in dem das erfasste Leergutgebinde im Durchschnitt einen Anstieg der Stromstärke bzw. der Leistungsaufnahme in dem Elektromotor verursacht.

Wie weiterhin aus FIG.4 ersichtlich ist, kann die maximale Leistungsaufnahme des Elektromotors, beispielsweise der erfasste maximale Stromstärkewert 420 je Entwertungsperiode mit der Zeit abnehmen (in FIG.4 mittels des Pfeils 460 veranschaulicht). Die zeitliche Abnahme der Leistungsaufnahme des Elektromotors kann zu der Zerkleinerung des Leergutgebindes und einem dazu abnehmenden mechanischen Widerstand korrespondieren. Mit anderen Worten, der abnehmende mechanische Widerstand des zerkleinerten Leergutgebindes macht eine geringere Leistungsaufnahme des Elektromotors erforderlich, was sich in der abnehmenden maximalen Stromstärke je Entwertungsperiode niederschlägt.

Durch einen Maschinenlernalgorithmus der tatsächlichen Entwertungszeit des Leergutgebindes zu einer angenommenen Entwertungszeit kann abhängig vom jeweils tatsächlich entwerteten Leergutgebinde eine Selbstoptimierung und ein Lerneffekt der Auswerteinheit bzw. der Ermittlungseinheit realisierbar sein (siehe auch Informationsrückkopplung 152, 156 in FIG.1A).

In dem Betriebsstromprofil in FIG.4 ist zu erkennen, dass sich während einer Entwertung eines Leergutgebindes der momentane Stromstärkewert stark ändern kann. Dementsprechend kann das Betriebsstromprofil zuverlässig ausgewertet werden. Um Fehlinformationen, beispielsweise in der Anlaufphase der Entwertungseinheit zu vermeiden, kann die Auswerteeinheit im Hintergrund mittels eines Tiefpass-Filters schnelle Stromspitzen 430 herausfiltern. Dadurch kann vermieden werden, dass diese Stromspitzen 430, wie sie beim Start des Elektromotors auftreten können, fälschlicherweise als Entwertung ermittelt werden.

Im Folgenden werden einige Beispiele beschrieben, die sich auf das hierin Beschriebene und in den Figuren Dargestellte beziehen.

Beispiel 1 ist eine Leergutgebinde-Rücknahmevorrichtung aufweisend: eine Entwertungseinheit eingerichtet zur Entwertung von Leergutgebinden, wobei die Entwertung unter Verwendung eines Elektromotors erfolgt; einen Sensor, der eingerichtet ist, eine elektrische Messgröße, welche eine Leistungsaufnahme des Elektromotors repräsentiert, zu erfassen; und eine Ermittlungsvorrichtung, die eingerichtet ist zu ermitteln, ob für die erfasste elektrische Messgröße ein vorgegebenes Entwertungskriterium erfüllt ist und ein Entwertungsvorgang-Ausgabesignal auszugeben, wenn das vorgegebene Entwertungskriterium erfüllt ist, wobei das Entwertungsvorgang-Ausgabesignal anzeigt, dass die Entwertung eines Leergutgebindes stattgefunden hat.

Das vorgegebene Entwertungskriterium kann ein Überschreiten eines vorgegebenen Schwellenwertes, ein Übereinstimmen oder Abweichen eines zeitlichen Verlaufs der erfassten elektrischen Messgröße von einem Referenzverlauf und/oder eine Zuordnung der erfassten elektrischen Messgröße zu einem Leergutgebindetyp aus einer Vielzahl von Leergutgebindetypen basierend auf einem oder mehreren Referenzwerten der elektrischen Messgröße aufweisen.

In Beispiel 2 kann der Gegenstand von Beispiel 1 optional aufweisen, dass die Entwertungseinheit ein mechanisches Werk aufweist, das durch den Elektromotor angetrieben wird.

In Beispiel 3 kann der Gegenstand von Beispiel 2 optional aufweisen, dass das mechanische Werk ein Schneidwerk aufweist.

In Beispiel 4 kann der Gegenstand von Beispiel 2 optional aufweisen, dass das mechanische Werk ein Brechwerk aufweist.

In Beispiel 5 kann der Gegenstand von Beispiel 2 optional aufweisen, dass das mechanische Werk ein Kompaktierwerk aufweist.

In Beispiel 6 kann der Gegenstand von einem der Beispiele 1 bis 5 optional aufweisen, dass der Sensor eines oder mehrere aufweist von: einen Stromwandler, der eingerichtet ist, eine Stromstärke an mindestens einer Phase des Elektromotors zu erfassen; einen Messwiderstand, der eingerichtet ist, einen Spannungsabfall an mindestens einer Phase des Elektromotors zu erfassen; und einen Hall-Sensor, der eingerichtet ist, ein Magnetfeld des Elektromotors oder eines Stromkabels zum Elektromotor zu erfassen.

In Beispiel 7 kann der Gegenstand von einem der Beispiele 1 bis 6 optional ferner aufweisen: eine Leergutgebinde-Annahmeund Sortiereinheit aufweisend einen weiteren Sensor, der eingerichtet ist, den Leergutgebindetyp von zugeführtem Leergut aus einer Vielzahl von Leergutgebindetypen zu ermitteln.

In Beispiel 8 kann der Gegenstand von Beispiel 7 optional aufweisen, dass die Leergutgebinde-Annahme- und Sortiereinheit eingerichtet ist, pfandbeaufschlagtes Leergutgebinde der Entwertungseinheit zuzuführen.

In Beispiel 9 kann der Gegenstand von einem der Beispiele 1 bis 6 optional ferner aufweisen: eine Pfandrückgabeeinheit, die eingerichtet ist, das zu dem entwerteten Leergutgebinde korrespondierende Pfand auszugeben.

In Beispiel 10 kann der Gegenstand von Beispiel 9 optional aufweisen, dass die Pfandrückgabeeinheit eingerichtet ist, das Pfand basierend auf dem Entwertungsvorgang-Ausgabesignal auszugeben.

In Beispiel 11 kann der Gegenstand von Beispiel 9 oder 10 optional aufweisen, dass die Pfandrückgabeeinheit eingerichtet ist, das Pfand basierend auf dem von dem weiteren Sensor der Leergutgebinde-Annahme- und Sortiereinheit ermittelten Leergutgebindetyp auszugeben.

In Beispiel 12 kann der Gegenstand von einem der Beispiele 9 bis 11 optional aufweisen, dass die Pfandrückgabeeinheit eingerichtet ist, den von dem weiteren Sensor der Leergutgebinde-Annahme- und Sortiereinheit ermittelten Leergutgebindetyp mit dem von der Ermittlungsvorrichtung erfassten Entwertungsvorgang abzugleichen.

In Beispiel 13 kann der Gegenstand von Beispiel 12 optional aufweisen, dass die Pfandrückgabeeinheit eingerichtet ist, dass Pfand auszugeben, wenn der von dem weiteren Sensor der Leergutgebinde-Annahme- und Sortiereinheit ermittelte Leergutgebindetyp zu dem von der Ermittlungsvorrichtung ermittelten Entwertungsvorgang korrespondiert.

In Beispiel 14 kann der Gegenstand von einem der Beispiele 12 oder 13 optional aufweisen, dass die Pfandrückgabeeinheit eingerichtet ist, das Ergebnis des Abgleichs an die Ermittlungsvorrichtung zu übermitteln.

In Beispiel 15 kann der Gegenstand von einem der Beispiele 12 bis 15 optional aufweisen, dass die Ermittlungsvorrichtung einen Maschinenlernalgorithmus aufweist, der eingerichtet ist, das empfangene Ergebnis des Abgleichs in dem Entwertungskriterium zu berücksichtigen.

In Beispiel 16 kann der Gegenstand von einem der Beispiele 1 bis 15 optional aufweisen, dass die Ermittlungsvorrichtung eingerichtet ist, einen Leergutgebindetyp aus einer Vielzahl von Leergutgebindetypen aus der erfassten elektrischen Messgröße, beispielsweise einem zeitlichen Verlauf der elektrischen Messgröße (Betriebsstromprofil), zu ermitteln, basierend auf einem oder mehreren aus: einem globalen Maximalwert der elektrischen Messgröße; lokalen Maximalwerten der elektrischen Messgröße; einer Anzahl lokaler Maximalwerte der elektrischen Messgröße; einem zeitlichen Verlauf der elektrischen Messgröße in einer vorgegebenen Zeitperiode; und/oder einem zeitlichen Verlauf der lokalen Maximalwerte der elektrischen Messgröße.

Beispiel 17 ist eine Ermittlungsvorrichtung für einen Elektromotor einer Leergutgebinde-Rücknahmevorrichtung, die Ermittlungsvorrichtung eingerichtet zu ermitteln, ob für eine erfasste elektrische Messgröße des Elektromotors ein vorgegebenes Entwertungskriterium erfüllt ist, wobei die elektrische Größe mittels eines Sensors der Leergutgebinde-Rücknahmevorrichtung erfasst wird und wobei die Entwertung des Leergutgebindes unter Verwendung des Elektromotors einer Entwertungseinheit, die zur Entwertung von Leergutgebinden eingerichtet ist, erfolgt. Die Ermittlungsvorrichtung ist ferner eingerichtet ein Entwertungsvorgang-Ausgabesignal auszugeben, wenn das vorgegebene Entwertungskriterium erfüllt ist, wobei das Entwertungsvorgang-Ausgabesignal anzeigt, dass die Entwertung eines Leergutgebindes stattgefunden hat.

In Beispiel 18 kann der Gegenstand von Beispiel 17 optional ferner aufweisen: eine Kommunikationsvorrichtung, die eingerichtet ist, das Entwertungsvorgang-Ausgabesignal an eine Pfandrückgabeeinheit der Leergutgebinde-Rücknahmevorrichtung zu übermitteln.

In Beispiel 19 kann der Gegenstand von Beispiel 18 optional aufweisen, dass die Kommunikation der Kommunikationsvorrichtung drahtgebunden eingerichtet ist.

In Beispiel 20 kann der Gegenstand von Beispiel 18 optional aufweisen, dass die Kommunikation der Kommunikationsvorrichtung drahtlos eingerichtet ist.

In Beispiel 21 kann der Gegenstand von einem der Beispiele 18 bis 20 optional aufweisen, dass die Kommunikationsvorrichtung ferner eingerichtet ist, ein Ergebnis eines Abgleichs des ermittelten Leergutgebindetyps von der Pfandrückgabeeinheit zu empfangen.

In Beispiel 22 kann der Gegenstand von Beispiel 21 optional ferner aufweisen: einen Prozessor, der eingerichtet ist, das empfangene Ergebnis des Abgleichs in der Auswertung der elektrischen Messgröße, beispielsweise in der Ermittlung, ob das Entwertungskriterium erfüllt ist, durch einen Maschinenlernalgorithmus zu berücksichtigen.

In Beispiel 23 kann der Gegenstand von einem der Beispiele 18 bis 20 optional aufweisen, dass die Ermittlungsvorrichtung eingerichtet ist, einen Leergutgebindetyp aus einer Vielzahl von Leergutgebindetypen aus der erfassten elektrischen Messgröße zu ermitteln, basierend auf einem oder mehreren aus: einem globalen Maximalwert der elektrischen Messgröße; lokalen Maximalwerten der elektrischen Messgröße; einer Anzahl lokaler Maximalwerte der elektrischen Messgröße; einem zeitlichen Verlauf der elektrischen Messgröße in einer vorgegebenen Zeitperiode; und/oder einem zeitlichen Verlauf der lokalen Maximalwerte der elektrischen Messgröße.

Beispiel 24 ist ein computerlesbares Medium für eine Leergutgebinde-Rücknahmevorrichtung aufweisend Instruktionen, die, wenn sie von einem Prozessor ausgeführt werden, den Prozessor dazu veranlassen: Ermitteln, durch eine Ermittlungsvorrichtung gemäß einem der vorgenannten Beispiele, einer elektrischen Messgröße eines Elektromotors während der Entwertung eines Leergutgebindes in der Leergutgebinde-Rücknahmevorrichtung, wobei die Entwertung des Leergutgebindes unter Verwendung des Elektromotors einer Entwertungseinheit erfolgt; Vergleichen der erfassten elektrischen Messgröße mit einem vorgegebenen Entwertungskriterium; und Ausgeben eines Entwertungsvorgang-Ausgabesignals, wenn das vorgegebene Entwertungskriterium erfüllt ist, wobei das Entwertungsvorgang-Ausgabesignal anzeigt, dass die Entwertung eines Leergutgebindes stattgefunden hat.

Beispielsweise können die Instruktionen den Prozessor veranlassen zum Ermitteln, durch eine Ermittlungsvorrichtung gemäß einem zuvor genanntem Beispiel, einer Leistungsaufnahme eines Elektromotors der Leergutgebinde-Rücknahmevorrichtung während der Entwertung eines Leergutgebindes in der Leergutgebinde-Rücknahmevorrichtung; Vergleichen der erfassten Leistungsaufnahme mit einem vorgegebenen Schwellenwert; und Ausgeben eines Entwertungsvorgang-Ausgabesignals basierend auf dem Ergebnis des Vergleichs, wobei das Entwertungsvorgang-Ausgabesignals zu einem Entwertungsvorgang korrespondiert.

In Beispiel 25 kann der Gegenstand von Beispiel 24 optional aufweisen, dass die Leergutgebinde-Rücknahmevorrichtung eine Entwertungseinheit aufweist, die zur Entwertung von Leergutgebinden eingerichtet ist, wobei die Entwertung unter Verwendung eines Elektromotors erfolgt.

In Beispiel 26 kann der Gegenstand von Beispiel 25 optional aufweisen, dass die Entwertungseinheit ein mechanisches Werk aufweist, das durch den Elektromotor angetrieben wird.

In Beispiel 27 kann der Gegenstand von einem der Beispiele 24 bis 26 optional aufweisen, dass die Leergutgebinde-Rücknahmevorrichtung ferner eine Leergutgebinde-Annahme- und Sortiereinheit aufweist, die einen weiteren Sensor aufweist, der eingerichtet ist, den Leergutgebindetyp von zugeführtem Leergut aus einer Vielzahl von Leergutgebindetypen zu ermitteln.

In Beispiel 28 kann der Gegenstand von Beispiel 27 optional aufweisen, dass die Leergutgebinde-Annahme- und Sortiereinheit eingerichtet ist, pfandbeaufschlagtes Leergutgebinde der Entwertungseinheit zuzuführen.

In Beispiel 29 kann der Gegenstand von einem der Beispiele 24 bis 28 optional aufweisen, dass die Pfandrückgabeeinheit eingerichtet ist, das zu dem entwerteten Leergutgebinde korrespondierende Pfand auszugeben.

In Beispiel 30 kann der Gegenstand von einem der Beispiele 24 bis 29 optional aufweisen, dass die Pfandrückgabeeinheit eingerichtet ist, das Pfand basierend auf dem Entwertungsvorgang-Ausgabesignal auszugeben.

In Beispiel 31 kann der Gegenstand von einem der Beispiele 27 bis 30 optional aufweisen, dass die Pfandrückgabeeinheit eingerichtet ist, das Pfand basierend auf dem von dem weiteren Sensor der Leergutgebinde-Annahme- und Sortiereinheit ermittelten Leergutgebindetyp auszugeben.

In Beispiel 32 kann der Gegenstand von einem der Beispiele 27 bis 31 optional aufweisen, dass die Pfandrückgabeeinheit eingerichtet ist, den von dem weiteren Sensor der Leergutgebinde-Annahme- und Sortiereinheit ermittelte Leergutgebindetyp mit dem von der Ermittlungsvorrichtung ermittelten Entwertungsvorgang abzugleichen.

In Beispiel 33 kann der Gegenstand von einem der Beispiele 27 bis 32 optional aufweisen, dass die Pfandrückgabeeinheit eingerichtet ist, dass Pfand auszugeben, wenn der von dem weiteren Sensor der Leergutgebinde-Annahme- und Sortiereinheit ermittelte Leergutgebindetyp mit dem von der Ermittlungsvorrichtung erfassten Entwertungsvorgang korrespondiert.

In Beispiel 34 kann der Gegenstand von einem der Beispiele 32 bis 33 optional aufweisen, dass die Pfandrückgabeeinheit eingerichtet ist, das Ergebnis des Abgleichs an die Ermittlungsvorrichtung zu übermitteln.

In Beispiel 35 kann der Gegenstand von einem der Beispiele 32 bis 34 optional ferner Instruktionen aufweisen, die, wenn sie von einem Prozessor ausgeführt werden, den Prozessor dazu veranlassen: das empfangene Ergebnis des Abgleichs in dem vorgegebenen Entscheidungskriterium zu berücksichtigen.

In Beispiel 36 kann der Gegenstand von einem der Beispiele 24 bis 35 optional ferner Instruktionen aufweisen, die, wenn sie von dem Prozessor ausgeführt werden, den Prozessor dazu veranlassen: einen Leergutgebindetyp aus einer Vielzahl von Leergutgebindetypen aus der erfassten elektrischen Messgröße zu ermitteln, basierend auf einem oder mehreren aus: einem globalen Maximalwert der elektrischen Messgröße; lokalen Maximalwerten der elektrischen Messgröße; einer Anzahl lokaler Maximalwerte der elektrischen Messgröße; einem zeitlichen Verlauf der elektrischen Messgröße in einer vorgegebenen Zeitperiode; und/oder einem zeitlichen Verlauf der lokalen Maximalwerte der elektrischen Messgröße.

In Beispiel 37 kann der Gegenstand von einem der Beispiele 24 bis 36 optional ferner Instruktionen aufweisen, die, wenn sie von dem Prozessor ausgeführt werden, den Prozessor dazu veranlassen: Übermitteln des Entwertungsvorgang-Ausgabesignals an eine Pfandrückgabeeinheit der Leergutgebinde-Rücknahmevorrichtung; Abgleichen des durch die Ermittlungsvorrichtung ermittelten Entwertungsvorganges mit dem Leergutgebindetyp desselben Leergutgebindes, der von mindestens einem weiteren Sensor der Leergutgebinde-Rücknahmevorrichtung ermittelt wurde.

## Patentansprüche

1. Leergutgebinde-Rücknahmevorrichtung (100), aufweisend:
eine Entwertungseinheit (112) eingerichtet zur Entwertung von Leergutgebinden (104), wobei die Entwertung unter Verwendung eines Elektromotors (130) erfolgt;
einen Sensor (134), der eingerichtet ist, eine elektrische Messgröße, welche eine Leistungsaufnahme des Elektromotors (130) repräsentiert, zu erfassen; und
eine Ermittlungsvorrichtung (118), die eingerichtet ist zu ermitteln, ob für die erfasste elektrische Messgröße ein vorgegebenes Entwertungskriterium erfüllt ist und
ein Entwertungsvorgang-Ausgabesignal (154) auszugeben, wenn das vorgegebene Entwertungskriterium erfüllt ist,
wobei das Entwertungsvorgang-Ausgabesignal (154) anzeigt, dass die Entwertung eines Leergutgebindes (104) stattgefunden hat.

2. Leergutgebinde-Rücknahmevorrichtung (100) gemäß Anspruch 1,
wobei das vorgegebene Entwertungskriterium ein Überschreiten eines vorgegebenen Schwellenwertes (450), ein Übereinstimmen oder Abweichen eines zeitlichen Verlaufs der erfassten elektrischen Messgröße von einem Referenzverlauf und/oder eine Zuordnung der erfassten elektrischen Messgröße zu einem Leergutgebindetyp aus einer Vielzahl von Leergutgebindetypen basierend auf einem oder mehreren Referenzwerten der elektrischen Messgröße aufweist.

3. Leergutgebinde-Rücknahmevorrichtung (100) gemäß Anspruch 1 oder 2,
wobei die Entwertungseinheit (112) ein mechanisches Werk (172) aufweist, das durch den Elektromotor (130) antreibbar ist.

4. Leergutgebinde-Rücknahmevorrichtung (100) gemäß einem der Ansprüche 1 bis 3,
wobei der Sensor (134) eines oder mehrere aufweist von:
• einen Stromwandler (134-2), der eingerichtet ist, eine Stromstärke an mindestens einer Phase des Elektromotors (130) zu erfassen;
• einen Messwiderstand (134-1), der eingerichtet ist, einen Spannungsabfall an mindestens einer Phase des Elektromotors (130) zu erfassen; und
• einen Hall-Sensor (134-3), der eingerichtet ist, ein Magnetfeld des Elektromotors (130) oder eines Stromkabels (140) zum Elektromotor (130) zu erfassen.

5. Leergutgebinde-Rücknahmevorrichtung (100) gemäß einem der Ansprüche 1 bis 4, ferner aufweisend :
eine Leergutgebinde-Annahme- und Sortiereinheit (110) aufweisend einen zusätzlichen Sensor (132), der eingerichtet ist, den Leergutgebindetyp von zugeführtem Leergut aus einer Vielzahl von Leergutgebindetypen zu ermitteln.

6. Leergutgebinde-Rücknahmevorrichtung (100) gemäß einem der Ansprüche 1 bis 5, ferner aufweisend:
eine Pfandrückgabeeinheit (120), die eingerichtet ist, das zu dem entwerteten Leergutgebinde korrespondierende Pfand (160) auszugeben, und das Pfand (160) basierend auf dem Entwertungsvorgang-Ausgabesignal (154) auszugeben.

7. Leergutgebinde-Rücknahmevorrichtung (100) gemäß einem der Ansprüche 5 oder 6,
wobei die Pfandrückgabeeinheit (120) eingerichtet ist, das Pfand (160) basierend auf dem von dem weiteren Sensor (132) der Leergutgebinde-Annahme- und Sortiereinheit (110) ermittelten Leergutgebindetyp auszugeben, wobei die Pfandrückgabeeinheit (120) eingerichtet ist, den von dem zusätzlichen Sensor (132) der Leergutgebinde-Annahme- und Sortiereinheit (110) ermittelte Leergutgebindetyp mit dem von der Ermittlungsvorrichtung (118) erfassten Entwertungsvorgang abzugleichen.

8. Leergutgebinde-Rücknahmevorrichtung (100) gemäß Anspruch 7,
wobei die Pfandrückgabeeinheit (120) eingerichtet ist, das Pfand (160) auszugeben, wenn der von dem Sensor (132) der Leergutgebinde-Annahme- und Sortiereinheit (110) ermittelte Leergutgebindetyp mit dem von der Ermittlungsvorrichtung (118) erfassten entwerteten Leergutgebindetyp übereinstimmen.

9. Leergutgebinde-Rücknahmevorrichtung (100) gemäß Anspruch 7 oder 8,
wobei die Pfandrückgabeeinheit (120) eingerichtet ist, das Ergebnis des Abgleichs an die Ermittlungsvorrichtung (118) zu übermitteln.

10. Leergutgebinde-Rücknahmevorrichtung (100) gemäß Anspruch 9,
wobei die Ermittlungsvorrichtung (118) einen Maschinenlernalgorithmus aufweist, der eingerichtet ist, das empfangene Ergebnis des Abgleichs in dem Entwertungskriterium zu berücksichtigen.

11. Leergutgebinde-Rücknahmevorrichtung (100) gemäß einem der Ansprüche 1 bis 10,
wobei die Ermittlungsvorrichtung (118) eingerichtet ist, einen Leergutgebindetyp aus einer Vielzahl von Leergutgebindetypen aus der erfassten elektrischen Messgröße zu ermitteln, basierend auf einem oder mehreren aus:
• einem globalen Maximalwert der elektrischen Messgröße;
• lokalen Maximalwerten der elektrischen Messgröße;
• einer Anzahl lokaler Maximalwerte der elektrischen Messgröße;
• einem zeitlichen Verlauf der elektrischen Messgröße in einer vorgegebenen Zeitperiode (412, 414); und/oder
• einem zeitlichen Verlauf der lokalen Maximalwerte der elektrischen Messgröße.

12. Ermittlungsvorrichtung (118) für einen Elektromotor (130) einer Leergutgebinde-Rücknahmevorrichtung (100), wobei die Ermittlungsvorrichtung (118) eingerichtet ist zu ermitteln, ob für eine erfasste elektrische Messgröße des Elektromotors (130) ein vorgegebenes Entwertungskriterium erfüllt ist, wobei die elektrische Größe mittels eines Sensors (134) der Leergutgebinde-Rücknahmevorrichtung (100) erfasst wird und wobei die Entwertung des Leergutgebindes unter Verwendung des Elektromotors (130) einer Entwertungseinheit (112), die zur Entwertung von Leergutgebinden (104) eingerichtet ist, erfolgt;
die Ermittlungsvorrichtung (118) ferner eingerichtet ein Entwertungsvorgang-Ausgabesignal (154) auszugeben, wenn das vorgegebene Entwertungskriterium erfüllt ist, wobei das Entwertungsvorgang-Ausgabesignal (154) anzeigt, dass die Entwertung eines Leergutgebindes stattgefunden hat.

13. Ermittlungsvorrichtung (118) gemäß Anspruch 12, ferner aufweisend:
eine Kommunikationsvorrichtung, die eingerichtet ist, das Entwertungsvorgang-Ausgabesignal (154) an eine Pfandrückgabeeinheit (120) der Leergutgebinde-Rücknahmevorrichtung (100) zu übermitteln.

14. Ermittlungsvorrichtung (118) gemäß einem der Ansprüche 11 bis 13,
ferner eingerichtet, einen Leergutgebindetyp aus einer Vielzahl von Leergutgebindetypen aus der erfassten elektrischen Messgröße zu ermitteln, basierend auf einem oder mehreren aus:
• einem globalen Maximalwert der elektrischen Messgröße;
• lokalen Maximalwerten der elektrischen Messgröße;
• einer Anzahl lokaler Maximalwerte der elektrischen Messgröße;
• einem zeitlichen Verlauf der elektrischen Messgröße in einer vorgegebenen Zeitperiode (412, 414); und/oder
• einem zeitlichen Verlauf der lokalen Maximalwerte der elektrischen Messgröße.

15. Computerlesbares Medium für eine Leergutgebinde-Rücknahmevorrichtung (100) aufweisend Instruktionen, die, wenn sie von einem Prozessor ausgeführt werden, den Prozessor dazu veranlassen, folgendes auszuführen:
Ermitteln (302), durch eine Ermittlungsvorrichtung (118) gemäß Anspruch 12, einer elektrischen Messgröße eines Elektromotors (130) während der Entwertung eines Leergutgebindes in der Leergutgebinde-Rücknahmevorrichtung (100), wobei die Entwertung des Leergutgebindes unter Verwendung des Elektromotors (130) einer Entwertungseinheit (112) erfolgt;
Vergleichen (304) der erfassten elektrischen Messgröße mit einem vorgegebenen Entwertungskriterium; und
Ausgeben (306) eines Entwertungsvorgang-Ausgabesignals (154), wenn das vorgegebene Entwertungskriterium erfüllt ist, wobei das Entwertungsvorgang-Ausgabesignal (154) anzeigt, dass die Entwertung eines Leergutgebindes stattgefunden hat.
